# EUROPÄISCHE PATENTSCHRIFT

(11) **EP 2 376 818 B1**
(45) Veröffentlichungstag und Bekanntmachung des Hinweises auf die Patenterteilung: **04.11.2015**
(21) Anmeldenummer: 09795730.2
(22) Anmeldetag: 02.12.2009
(51) Int. Cl.: F16H 63/30, F16C 31/04

(54) **LAGERANORDNUNG ZUR LAGERUNG EINER WELLE SOWIE SCHALTDOMBAUEINHEIT MIT DER LAGERANORDNUNG**
BEARING ARRANGEMENT FOR SUPPORTING A SHAFT AND GEARSHIFT DOME UNIT COMPRISING SAID BEARING ARRANGEMENT
SYSTÈME DE PALIER POUR LE LOGEMENT D'UN ARBRE ET MODULE TOURELLE DE SÉLECTION MUNI DE CE SYSTÈME DE PALIER

(30) Priorität: 11.12.2008 DE 102008061876
(43) Veröffentlichungstag der Anmeldung: 19.10.2011
(73) Patentinhaber: Schaeffler Technologies AG & Co. KG, 91074 Herzogenaurach (DE)
(72) Erfinder: BECK, Tino, 96138 Burgebrach (DE); JAUERNIG, Dieter, 91074 Herzogenaurach (DE); MAIER, Waldemar, 91074 Herzogenaurach (DE)
(86) Internationale Anmeldenummer: PCT/EP2009/066199
(87) Internationale Veröffentlichungsnummer: WO 2010/066615

(56) Entgegenhaltungen:
- DE-A1- 10 064 918
- DE-A1-102007 045 652
- US-A- 3 813 102

## Beschreibung

### Gebiet der Erfindung

Die Erfindung betrifft eine Lageranordnung zur Lagerung einer Weller mit einer Lagereinrichtung, mit einem Halteabschnitt zur Aufnahme der Lagereinrichtung, wobei die Aufnahme in axialer Richtung der Welle zumindest einseitig durch einen Endanschlag begrenzt ist, so dass ein Herauswandern der Lagereinrichtung aus der Aufnahme durch den Endanschlag verhindert ist, und mit einem Dichtungsring, der zur Dichtung der Welle ausgebildet und/oder angeordnet ist. Die Erfindung betrifft auch eine Schaltdombaueinheit mit der Lageranordnung.

Die Lagerung von Wellen, oder allgemeiner von dreh- und/oder längsbewegbaren Bauteilen, ist in vielen Variationen umgesetzt worden. Üblicherweise wird ein beliebiges Lager, wie zum Beispiel ein Wälzlager oder ein Gleitlager, in einem Gehäuse festgelegt, wobei sich die Welle über das Lager an dem Gehäuse bewegbar abstützt. Derartige Lager werden eingepresst, eingeschraubt oder anders befestigt.

Bei manchen Lageranordnungen muss neben der Lagerfunktion auch eine Dichtungsfunktion umgesetzt werden, da im Bereich der Lagerstelle eine Abdichtung gegenüber eintretendem Schmutz oder austretendem Schmierstoff gewünscht ist. Eine derartige Lageranordnung ist beispielsweise der Druckschrift DE 296 15 599 U1 in der Figur 1 zu entnehmen. Diese Lageranordnung dient zur Lagerung einer Schaltwelle in einem Gehäuse, wobei in einem Lagerbereich unmittelbar benachbart zu einem Wälzlager ein Dichtungsring zur Abdichtung der Schaltwelle gegenüber dem Gehäuse eingesteckt ist.

US 3 813 102 A zeigt eine Lageranordnung nach dem Oberbegriff des Anspruchs 1.

Der Erfindung liegt die Aufgabe zu Grunde, eine Lageranordnung zur Lagerung einer Welle bzw. eine Schaltdombaueinheit vorzuschlagen, welche fertigungsgerecht ausgebildet ist bzw. sind.

Diese Aufgabe wird durch eine Lageranordnung mit den Merkmalen des Anspruchs 1 sowie durch eine Schaltdombaueinheit mit der Lageranordnung mit den Merkmalen des Anspruchs 11 gelöst. Bevorzugte oder vorteilhafte Ausführungsformen der Erfindung ergeben sich aus den Unteransprüchen, der nachfolgenden Beschreibung und den beigefügten Figuren.

Im Rahmen der Erfindung wird eine Lageranordnung vorgeschlagen, wie sie beispielsweise im Getriebebau eingesetzt wird. Die Lageranordnung umfasst eine Lagereinrichtung, welche zur Lagerung einer Welle ausgebildet ist. Die Lagerung kann optional eine Schwenkung, Rotation und/oder Verschiebung der Welle in Bezug auf die Längserstreckung der Welle ermöglichen. Die Lagereinrichtung kann prinzipiell beliebig ausgebildet sein, zum Beispiel als Wälzlager, Gleitlager oder in anderer Bauweise.

Die Lagereinrichtung ist in einem Halteabschnitt angeordnet, welcher hierfür eine Aufnahme anbietet. Um die Lagereinrichtung in axialer Richtung der Welle zu fixieren, ist die Aufnahme zumindest in einer axialen Richtung der Welle durch einen Endanschlag begrenzt, an den sich die Lagereinrichtung unmittelbar oder mittelbar über ein oder mehrere Distanzelemente abstützt bzw. abstützen kann.

Zudem umfasst die Lageranordnung mindestens einen Dichtungsring, der zur Dichtung der Welle insbesondere gegenüber dem Halteabschnitt ausgebildet und/oder angeordnet ist. Der Dichtungsring umläuft die Welle bzw. ist auf diese aufgesteckt und kann eine beliebige axiale Erstreckung aufweisen, so dass auch Dichthülsen, Kassettendichtungen etc. eine mögliche Ausführungsform der Erfindung bilden.

Es wird vorgeschlagen, dass der Endanschlag den Dichtungsring als Bestandteil umfasst oder der Endanschlag als der Dichtungsring ausgebildet ist. Somit nimmt im Rahmen der Erfindung der Dichtungsring eine Doppelfunktion ein, nämlich zum einen die Abdichtung vorzugsweise von der Welle gegenüber dem Halteabschnitt und zum zweiten als mechanischer Endanschlag bzw. Lageranschlag. Der Dichtungsring ist stoffschlüssig und/oder formschlüssig gegen die axiale Erstreckung der Welle in und/oder an der Aufnahme festgelegt und bietet dadurch eine ausreichende mechanische Stabilität. Insbesondere sind der Dichtungsring und der Halteabschnitt als zwei separate Bauteile oder -einheiten gefertigt, welche nachträglich miteinander verbunden werden.

Vorteile der Erfindung ergeben sich dadurch, dass durch die Doppelfunktion des Dichtungsrings zum einen Bauteile eingespart werden und zum anderen die Fertigung vereinfacht werden kann.

Bei einer besonders bevorzugten Ausführungsform der Erfindung ist der Halteabschnitt aus Kunststoff, vorzugsweise aus einem verstärkten, insbesondere glasfaserverstärkten Kunststoff ausgebildet. Diese Ausbildungsform erlaubt es, dass der Halteabschnitt kostengünstig in einem Spritzgussverfahren hergestellt werden kann.

Ergänzend oder alternativ ist der Dichtungsring - insbesondere in einem Anbindungsbereich an die Aufnahme des Halteabschnitts - bevorzugt aus Kunststoff hergestellt. Es kann nämlich besonders vorteilhaft sein, wenn beide Partner, der Halteabschnitt und der Anbindungsbereich des Dichtungsrings, aus Kunststoff hergestellt sind, da es dann möglich ist, mittels Schweißen, z.B. Laserschweißen, Ultraschallschweißen oder Reibschweißen, und/oder Kleben eine stark belastbare Verbindung zu schaffen.

Bei einer kostengünstig zu fertigenden Alternative bildet die Aufnahme im Bereich der Lagereinrichtung und des Dichtungsrings eine zylinderförmige Halterung. Eine derartige Geometrie kann besonders einfach entformt werden, da keine Hinterschneidungen oder dergleichen zu berücksichtigen sind. Selbstverständlich ist es jedoch auch möglich, dass in die zylinderförmige Halterung Durchbrüche etc. eingebracht sind.

Bei einer praxisnahen Realisierung weist der Dichtungsring eine berührende Dichtung, zum Beispiel eine Dichtungslippe, auf, die an der Welle im eingebauten Zustand dichtend anliegend. Bei einer alternativen Ausführungsform kann der Dichtungsring jedoch als eine Spaltdichtung, Labyrinthdichtung oder allgemein als eine berührungslose Dichtung ausgebildet sein.

Besonders vorteilhaft ist die Erfindung einsetzbar, wenn die Lagereinrichtung, insbesondere die Außenhülle der Lagereinrichtung, welche mit der Aufnahme in Kontakt kommt, aus Metall besteht. Für den Fall, dass der Halteabschnitt und/oder der Dichtungsring aus Kunststoff gefertigt sind, kommt es aufgrund des Materialmixes zu unterschiedlichen Wärmeausdehnungen bei Temperaturwechselbelastungen der Lageranordnung. Dadurch, dass die Lagereinrichtung in der Aufnahme und von dem Dichtungsring formschlüssig gehalten wird, wird eine direkte Verbindung zwischen der metallischen Lagereinrichtung und dem Halteabschnitt aus Kunststoff vermieden, so dass auch bei unterschiedlichen Ausdehnungen die Fixierung der Lagereinrichtung stabil bleibt.

Bei einer Weiterbildung der Erfindung wird die Lagereinrichtung auf der dem Dichtungsring abgewandten Seite durch ein einsteckbares Rückhalteelement vor dem Herauswandern aus der Aufnahme gesichert. Vorzugsweise wird bei der Montage der Lageranordnung zunächst der Dichtungsring in der Aufnahme befestigt, in einem weiteren Arbeitsschritt die Lagereinrichtung eingesteckt und/oder eingepresst und in einem nachfolgenden Schritt das einsteckbare Rückhaltelement positioniert.

Vorzugsweise wird das Rückhaltelement in einer Einschubrichtung winklig zur axialen Erstreckung der Welle in eine Halterung eingeschoben. Besonders bevorzugt ist die Einschubrichtung senkrecht oder nahezu senkrecht zur axialen Erstreckung der Welle ausgerichtet, so dass eine in axialer Richtung der Welle wirkende Kraftkomponente von der Lagereinrichtung auf das Rückhaltelement nicht zu einem Herausschieben des Rückhalteelements führt.

Bei einer Weiterbildung der Erfindung ist das Rückhaltelement so ausgebildet, dass es in der Halterung vor einem Herauswandern durch die Welle gesichert ist. Beispielsweise weist das Rückhalteelement eine Durchgangsöffnung auf, durch die die Welle bei der Montage durchgesteckt wird. Statt einer Durchgangsöffnung kann auch eine andere Kontur verwendet werden, welche das Rückhalteelement durch die Welle verliersicher hält. Das Rückhalteelement kann formschlüssig, stoffschlüssig und/oder reibschlüssig in der Halterung befestigt werden. Beispielsweise ist es möglich, dass das Rückhalteelement eingeklipst, verklebt, verschweißt oder dergleichen wird.

Ein weiterer Gegenstand der Erfindung betrifft eine Schaltdombaueinheit mit einem Schaltdomgehäuse zur Lagerung einer Schaltwelle, welche vorzugsweise zum Einsatz mit einem Wechselgetriebe, insbesondere Zahnräderwechselgetriebe, geeignet und/oder ausgebildet ist. Das Schaltdomgehäuse ist durch eine Lageranordnung nach einem der vorhergehenden Ansprüche gekennzeichnet. Als Lagereinrichtung zeigt das Schaltdomgehäuse vorzugsweise eine Linear-Rotationslagerung, die der Schaltwelle eine Verschiebung und Schwenkung ermöglicht.

Besonders bevorzugt ist das Schaltdomgehäuse als Deckel zu einem Innenraum in einem Getriebe mit Ölsumpfatmosphäre ausgebildet, wobei der Dichtungsring den Innenraum von einer ölfreien Umgebung trennt.

Es ist bevorzugt, dass das Schaltdomgehäuse weitere Funktionsbereiche aufweist, insbesondere eine Schaltkulissenführung und/oder eine Rasteinrichtung. In dieser Ausbildungsform ist das Schaltdomgehäuse eine hochintegrierte Baueinheit ausgebildet, welche neben der Eigenschaft als Funktionsträger zudem einen Deckel für das Getriebe bildet. Bei einer bevorzugten konstruktiven Ausgestaltung ist das Schaltdomgehäuse als ein einstückiges Kunststoffspritzgussteil realisiert.

Weitere Merkmale, Vorteile und Wirkungen der Erfindung ergeben sich aus der nachfolgenden Beschreibung eines bevorzugten Ausführungsbeispiels und den beigefügten Figuren. Dabei zeigen:
- Fig. 1: eine schematische dreidimensionale Draufsicht auf eine Schaltdombaueinheit als ein Ausführungsbeispiel der Erfindung;
- Fig. 2: eine schematische dreidimensionale Ansicht von unten auf die Schaltdombaueinheit nach Figur 1;
- Fig. 3: eine schematische dreidimensionale Ansicht von unten auf das einstückige Schaltdomgehäuse der Schaltdombaueinheit nach Figur 1;
- Fig. 4: eine schematische dreidimensionale Ansicht im Teilschnitt von unten auf die Schaltdombaueinheit nach Figur 1.

Gleiche oder einander entsprechende Teile sind jeweils mit gleichen bzw. einander entsprechenden Bezugszeichen versehen. Es wird unterstrichen, dass die Einzelbaugruppen oder Einzelkomponenten auch in anderen Vorrichtungen einsetzbar sind.

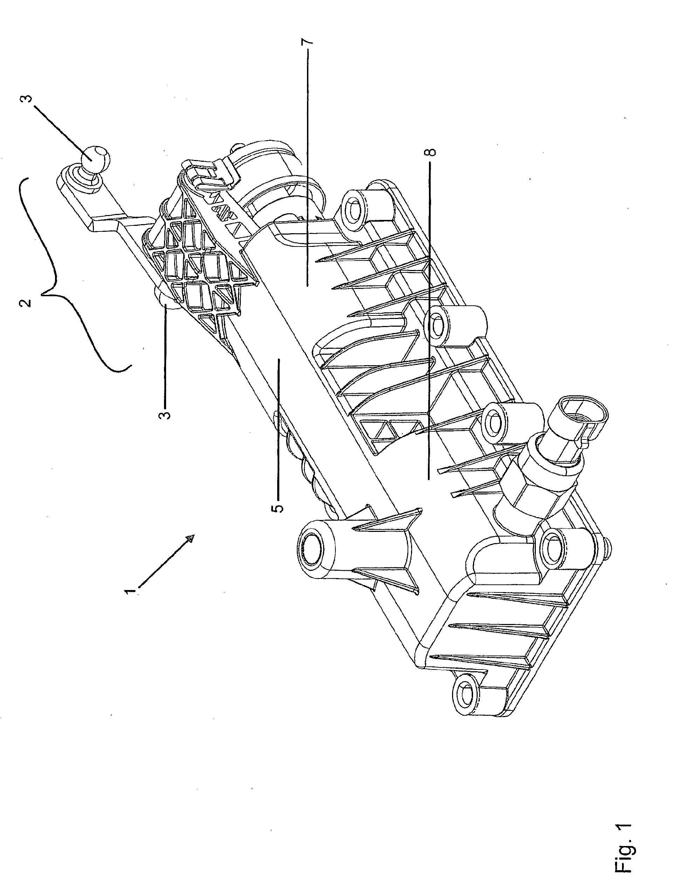

Die Figur 1 zeigt in einer schematisch dreidimensionalen Darstellung eine Schaltdombaueinheit 1 als ein Ausführungsbeispiel der Erfindung. Die Schaltdombaueinheit 1 ist ausgebildet, um eine Wähl- und/oder Schaltbewegung, welche von einem Benutzer oder einem Aktor eingeleitet wird, umzusetzen und an ein nachgeschaltetes Getriebe, insbesondere ein Zahnräderwechselgetriebe, weiterzugeben. Die Schaltdombaueinheit 1 ist insbesondere zur Verwendung in einem Kraftfahrzeug ausgebildet. Zum Einleiten der Schalt- und/oder Wählbewegungen zeigt die Schaltdombaueinheit 1 ein Hebelwerk 2, welches mechanische Schnittstellen, zum Beispiel in Form von Kugelköpfen 3 zur mechanischen Kopplung zum Beispiel mit Bowdenzügen oder Schaltstangen aufweist.

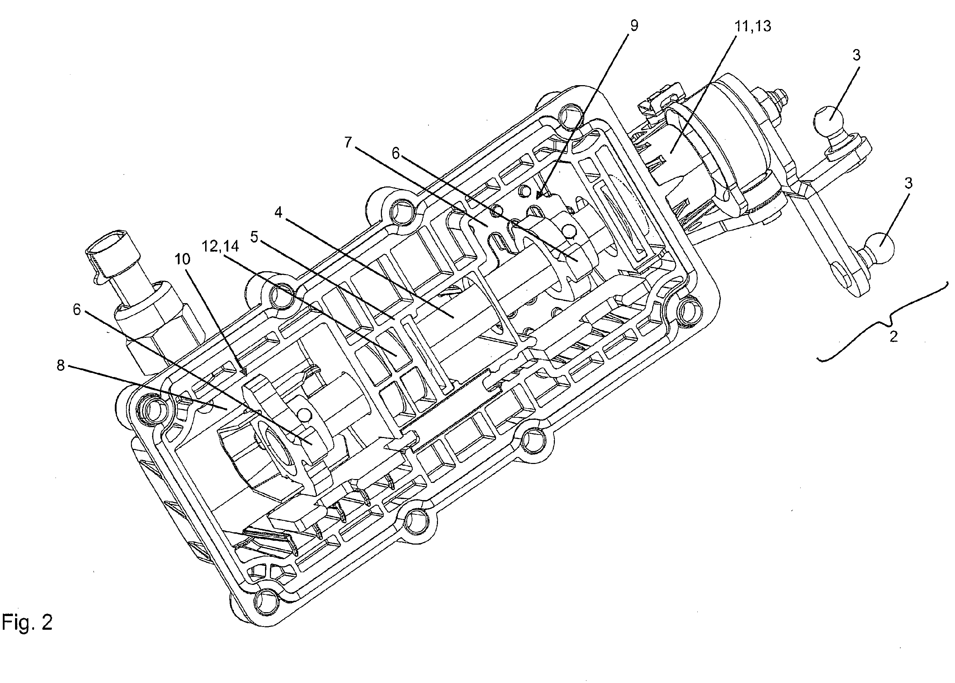

Die Wähl- und/oder Schaltbewegungen werden auf eine Schaltwelle 4 übertragen, welche in der Figur 2 zu erkennen ist. Die Figur 2 zeigt die Schaltdombaueinheit 1 von der Unterseite ebenfalls in einer schematischen dreidimensionalen Darstellung. Die Schaltwelle 4 ist in einem Schaltdomgehäuse 5 bzw. über das Schaltdomgehäuse 5 hinsichtlich ihrer axialen Erstreckung verschiebbar und schwenkbar gelagert. Das Schaltdomgehäuse 5 ist aus Kunststoff ausgebildet und vorzugsweise im Kunststoffspritzguss hergestellt. An der Schaltwelle 4 sind Schaltfingerabschnitte 6 befestigt, welche die mittlerweile umgesetzte Schalt- und/oder Wählbewegung auf nicht dargestellte Schaltschienen oder andere Elemente überträgt. Die Schaltschienen erstrecken sich senkrecht zu der Schaltwelle 4, so dass diese bei einer Schwenkbewegung der Schaltfingerabschnitte 6 um die eigene Längsachse in Längsrichtung der Schaltschienen verschoben werden. Die Schaltfingerabschnitte 6 können wahlweise unmittelbar an die Schaltschienen oder über Mitnehmerelemente an den Schaltschienen angreifen. Beispielsweise sind jedem Schaltfingerabschnitt 6 mehrere Schaltschienen, zum Beispiel drei Schaltschienen zugeordnet, welche in Abhängigkeit der axialen Lage der Schaltwelle 4 von den Schaltfingerabschnitten 6 selektiv betätigt werden und denen - insbesondere bis auf dem Rückwärtsgang - jeweils zwei wählbare Gänge, zum Beispiel erster zweiter Gang oder dritter vierter Gang zugeordnet sind.

Das Schaltdomgehäuse 5 weist zwei voneinander räumlich getrennte Kammerbereiche 7 und 8 auf, durch bzw. in die sich die Schaltwelle 4 erstreckt. In dem ersten Kammerbereich 7, durch den sich die Schaltwelle 4 vollständig oder durchgehend erstreckt, ist eine Kulissenanordnung 9 realisiert, die eine Zwangs- oder Kulissenführung der Schaltwelle 4 hinsichtlich der Verschiebe- und/oder Schwenkbewegungen definiert. Im zweiten Kammerbereich ist eine Rastanordnung 10 positioniert, welcher ein Einrasten der Schaltwelle 4 bei bestimmten Positionen, insbesondere bei zu einem gewählten und/oder eingelegten Gang korrespondierenden Positionen umsetzt. Zudem wird durch die Rastanordnung 10 die aufzuwendende Schalt- bzw. Wählkraft gesteuert. Im zweiten Kammerbereich 8 endet die Schaltwelle 4 mit einem freien, ungelagerten Ende.

Die Schaltwelle 4 ist über zwei Lagerbereiche 11, 12 gelagert, wobei der erste Lagerbereich 11 im Bereich einer Durchgangsöffnung 13 in dem Schaltdomgehäuse 5 und der zweite Lagerbereich 12 in einem Zwischensteg 14 zwischen dem ersten Kammerbereich 7 und dem zweiten Kammerbereich 8 angeordnet ist. Durch diese Lageranordnung ist die Schaltwelle 4 im Hinblick auf das freie Ende im Bereich der Rastanordnung 10 fliegend gelagert.

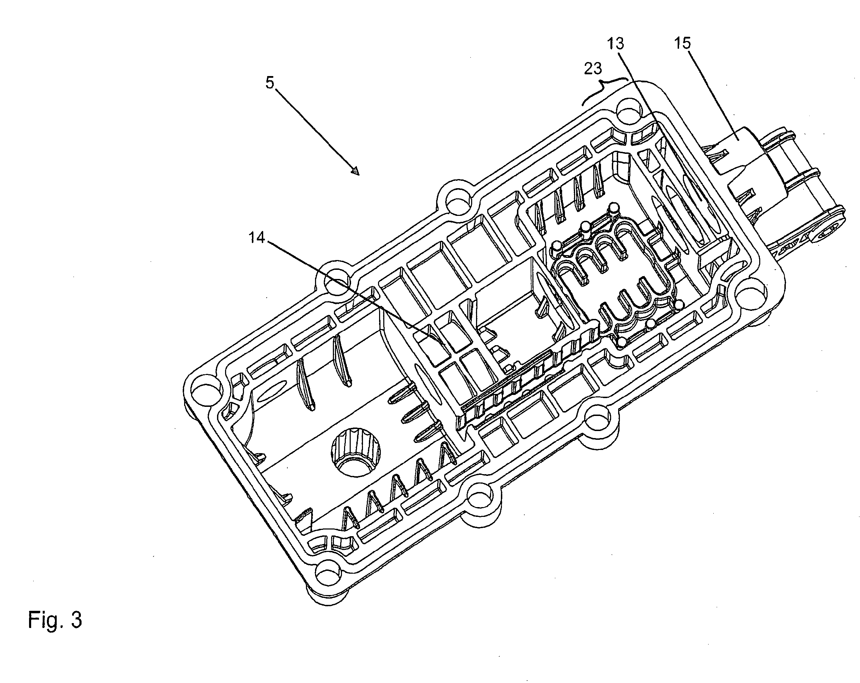

Die Figur 3 zeigt das einstückige Schaltdomgehäuse 5 in einer isometrischen schematischen Darstellung von der Unterseite. Aus dieser Darstellung ist zu entnehmen, dass die Durchgangsöffnung 13 durch einen einstückig aufgesetzten oder angeformten Stutzen 15 gebildet wird.

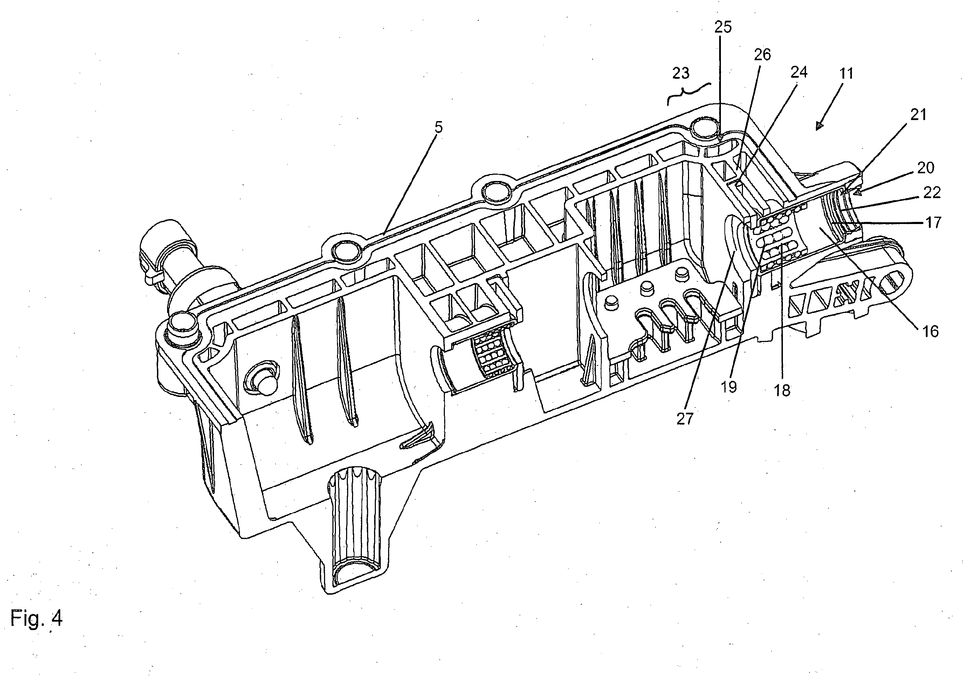

Die Figur 4 zeigt in einer schematischen dreidimensionalen Schnittdarstellung das Schaltdomgehäuse 5 in einem Schnitt entlang der nicht dargestellten Schaltwelle 4, um den Aufbau des ersten Lagerbereichs 11 zu illustrieren. In dem Lagerbereich 11 erstreckt sich in dem Stutzen 15 und durch die Wandung des Schaltdomgehäuses 5 eine Lagereinrichtung 16. Die Lagereinrichtung 16 ist als eine Linear- Rotationslagerung ausgebildet und weist eine äußere, metallene Hülse 17 auf, in der ein Käfig 18 über Kugeln 19 sowohl in Umlaufrichtung als auch in Linearrichtung entlang der Längserstreckung der Schaltwelle 4 abwälzend gelagert ist.

Durch die Wandung des Schaltdomgehäuses 5 und den Stutzen 15 wird ein zylinderförmiger Aufnahmebereich 20 bereitgestellt, welcher die Lagereinrichtung 16 aufnimmt. Der außenseitige Auslauf des Aufnahmebereichs 20 ist in dem Schaltdomgehäuse 5 frei auslaufend oder größer werdend so ausgeführt, dass die Lagereinrichtung 16 von außen in den Aufnahmebereich 20 eingeführt werden kann bzw. könnte. Mit dem Ziel, ein Herauswandern der Lagereinrichtung 16 aus dem Aufnahmebereich 20 zu verhindern, ist stirnseitig an der Lagereinrichtung 16 ein Dichtungsring 21 optional an einer Anlageschulter positioniert.

Der Aufnahmebereich 20 hält weder den Dichtungsring 21 noch die Lagereinrichtung 16 in axialer Richtung zur Außenseite des Schaltdomgehäuses 5 formschlüssig. Um ein Herauswandern des Dichtungsrings 21 zu verhindern, wird der Dichtungsring 21 mit dem Schaltdomgehäuse 5 nach dem Einbau unverrückbar verbunden. Die Verbindung erfolgt bevorzugt durch ein Kleben oder ein Schweißen zwischen einem Außenbereich des Dichtungsrings 21 und dem Innenbereich des Stutzens 15 und/oder dem Aufnahmebereich 20 des Schaltdomgehäuses 5. Mit diesem Kunstgriff bildet der Dichtungsring 21 einen stabilen, belastbaren Endanschlag für die Lagereinrichtung 16.

Die Lagereinrichtung 16 kann, insbesondere nach der Fixierung des Dichtungsrings 21 so eingesetzt werden, dass sie in der Sollposition den Dichtungsring 21 berührt oder beabstandet zu ihm angeordnet ist. Auf jeden Fall verhindert der Dichtungsring 21 zuverlässig ein Herauswandern der Lagereinrichtung 16 in axialer Richtung nach außen. Zur Abdichtung der Welle 4 gegen das Schaltdomgehäuse 5 weist der Dichtungsring 21 eine radial nach innen gerichtete Dichtungslippe 22 auf, welche berührend auf der Welle 4 aufliegt.

An dem gegenüber liegenden Ende der Lagereinrichtung 16 ist eine Halterung 23 einstückig in das Schaltdomgehäuse 5 eingeformt, welche zur Aufnahme eines Rückhalteelements 24 in Form einer Platte ausgebildet ist. Bei einer möglichen Montagereihenfolge wird zunächst der Dichtungsring 21 mit dem Schaltdomgehäuse 5 stoff- und/oder formschlüssig in axialer Richtung nach außen verbunden. In einem nächsten Schritt wird die Lagereinrichtung 16 eingesetzt oder eingepresst. Danach wird die Lagereinrichtung 16 bezüglich der axialen Richtung in das Innere des Schaltdomgehäuses 5 gesichert, indem das Rückhalteelement 24 in einer Einschubrichtung 25 in die Halterung 23 eingeführt wird. Das Rückhalteelement 24 weist Mittel zur Befestigung in der Halterung 23, wie zum Beispiel zwei seitliche, entlang der Einschubrichtung 25 verlaufende, Stege 26 auf, welche in Einschubrichtung 25 rampenförmig ausgebildet sind, um eine Klemmung zu erreichen. Alternativ hierzu kann das Rückhalteelement 24 in der Halterung 23 auch stoff- und/oder reib- und/oder formschlüssig festgelegt sein. Das Rückhalteelement 24 weist eine Durchgangsöffnung 27 auf, durch die die Welle 4 bei der Montage gesteckt wird, so dass das Rückhalteelement 24 vor einem Herausrutschen durch die Welle 4 gesichert ist.

Die Lagereinrichtung 16 liegt somit formschlüssig begrenzt und/oder eingespannt zwischen dem Rückhalteelement 24 und dem Dichtungsring 21.

Vorzugsweise ist der Außendurchmesser des Dichtungsrings 21 größer bemessen als der Außendurchmesser der Hülse 17 beziehungsweise der Lagereinrichtung 16.

### Bezugszeichenliste:

- 1: Schaltdombaueinheit
- 2: Hebelwerk
- 3: Kugelköpfe
- 4: Schaltwelle
- 5: Schaltdomgehäuse
- 6: Schaltfingerabschnitte
- 7: erster Kammerbereich
- 8: zweiter Kammerbereich
- 9: Kulissenanordnung
- 10: Rastanordnung
- 11: erster Lagerbereich
- 12: zweiter Lagerbereich
- 13: Durchgangsöffnung
- 14: Zwischensteg
- 15: Stutzen
- 16: Lagereinrichtung
- 17: Hülse
- 18: Käfig
- 19: Kugeln
- 20: Aufnahmebereich
- 21: Dichtungsring
- 22: Dichtungslippe
- 23: Halterung
- 24: Rückhalteelement
- 25: Einschubrichtung
- 26: Stege
- 27: Durchgangsöffnung

## Patentansprüche

1. Lageranordnung (11) für eine Welle (4): mit einer Lagereinrichtung (16) zur Lagerung der Welle (4), mit einem Halteabschnitt mit einer Aufnahme (20) für die Lagereinrichtung (16), wobei die Aufnahme (20) in axialer Richtung der Welle (4) zumindest einseitig durch einen Endanschlag (21) begrenzt ist, so dass ein Herauswandern der Lagereinrichtung (16) aus der Aufnahme (20) durch den Endanschlag (21) verhindert ist, und mit einem Dichtungsring (21), der zur Dichtung der Welle (4) ausgebildet und/oder angeordnet ist,
wobei der Endanschlag den Dichtungsring (21) umfasst oder als der Dichtungsring (21) ausgebildet ist, und wobei der Dichtungsring (21) stoffschlüssig und/oder formschlüssig in und/oder an der Aufnahme (20) festgelegt ist, **dadurch gekennzeichnet, dass** die Lagereinrichtung (16) auf der dem Dichtungsring (21) abgewandten Seite durch ein einsteckbares Rückhalteelement (24) vor dem Herauswandern gesichert ist.

2. Lageranordnung (11) nach Anspruch 1, **dadurch gekennzeichnet, dass** der Halteabschnitt aus Kunststoff ausgebildet ist.

3. Lageranordnung nach Anspruch 1 oder 2, **dadurch gekennzeichnet, dass** der Dichtungsring (21) in die Aufnahme (20) eingeschweißt und/oder eingeklebt ist.

4. Lageranordnung (11) nach einem der vorhergehenden Ansprüche, **dadurch gekennzeichnet, dass** die Aufnahme (20) im Bereich der Lagereinrichtung (16) und des Dichtungsrings eine zylinderförmige und/oder zylinderförmig abgestufte Halterung bildet.

5. Lageranordnung (11) nach einem der vorhergehenden Ansprüche, **dadurch gekennzeichnet, dass** der Dichtungsring (21) als eine berührende Dichtung realisiert ist.

6. Lageranordnung (11) nach einem der vorhergehenden Ansprüche, **dadurch gekennzeichnet, dass** die Lagereinrichtung (16) zumindest teilweise aus Metall besteht.

7. Lageranordnung (11) nach Anspruch 1, **dadurch gekennzeichnet, dass** das Rückhalteelement (24) in einer Einschubrichtung (25) winklig zur axialen Erstreckung der Welle (4) in eine Halterung (23) eingeschoben ist.

8. Lageranordnung (11) nach Anspruch 1 oder 7, **dadurch gekennzeichnet, dass** das Rückhalteelement (24) in der Halterung (23) vor einem Herauswandern durch die Welle (4) gesichert ist.

9. Lageranordnung (11) nach einem der Ansprüche 1 bis 8, **dadurch gekennzeichnet, dass** das Rückhaltelement (23) stoffschlüssig und/oder kraftschlüssig befestigt ist.

10. Schaltdombaueinheit (1) mit einem Schaltdomgehäuse (5) zur Lagerung einer Schaltwelle (4), **gekennzeichnet durch** eine Lageranordnung (11) nach einem der vorhergehenden Ansprüche.

11. Schaltdombaueinheit (1) nach Anspruch 10, **dadurch gekennzeichnet, dass** das Schaltdomgehäuse (5) als Deckel einen Innenraum mit Ölsumpfatmosphäre abschließt, wobei der Dichtungsring (21) den Innenraum von der ölfreien Umgebung trennt.

12. Schaltdombaueinheit (1) nach Anspruch 10 oder 11, **dadurch gekennzeichnet, dass** in dem Schaltdomgehäuse (5) weitere Funktionsbereiche, insbesondere eine Schaltkulissenführung (9) und/oder eine Rasteinrichtung (10) integriert ist bzw. sind.

13. Schaltdombaueinheit (1) nach einem der vorhergehenden Ansprüche, **dadurch gekennzeichnet, dass** das Schaltdomgehäuse (5) als ein einstückiges Kunststoffspritzgussteil ausgebildet ist.

## Claims

1. Bearing arrangement (11) for a shaft (4): having a bearing device (16) for mounting the shaft (4), having a holding section with a seat (20) for the bearing device (16), the seat (20) being delimited in the axial direction of the shaft (4) at least on one side by an end stop (21), with the result that the end stop (21) prevents the bearing device (16) from migrating out of the seat (20), and having a sealing ring (21) which is configured and/or arranged for sealing the shaft (4), the end stop comprising the sealing ring (21) or being configured as the sealing ring (21), and the sealing ring (21) being fixed in and/or on the seat (20) in an integrally joined and/or positively locking manner, **characterized in that**, on the side which faces away from the sealing ring (21), the bearing device (16) is secured against migrating outwards by way of a retaining element (24) which can be plugged in.

2. Bearing arrangement (11) according to Claim 1, **characterized in that** the holding section is configured from plastic.

3. Bearing arrangement according to Claim 1 or 2, **characterized in that** the sealing ring (21) is welded and/or adhesively bonded into the seat (20).

4. Bearing arrangement (11) according to one of the preceding claims, **characterized in that** the seat (20) forms a cylindrical and/or cylindrically stepped holder in the region of the bearing device (16) and the sealing ring.

5. Bearing arrangement (11) according to one of the preceding clams, **characterized in that** the sealing ring (21) is realized as a contact seal.

6. Bearing arrangement (11) according to one of the preceding clams, **characterized in that** the bearing device (16) consists at least partially of metal.

7. Bearing arrangement (11) according to Claim 1, **characterized in that** the retaining element (24) is pushed into a holder (23) in a push-in direction (25) at an angle with respect to the axial extent of the shaft (4).

8. Bearing arrangement (11) according to Claim 1 or 7, **characterized in that** the retaining element (24) is secured in the holder (23) by way of the shaft (4) against migrating outwards.

9. Bearing arrangement (11) according to one of Claims 1 to 8, **characterized in that** the retaining element (23) is fastened in an integrally joined and/or non-positive manner.

10. Gearshift tower unit (1) having a gearshift tower housing (5) for mounting a shift shaft (4), **characterized by** a bearing arrangement (11) according to one of the preceding claims.

11. Gearshift tower unit (1) according to Claim 10, **characterized in that** the gearshift tower housing (5), as cover, closes off an interior space with an oil sump atmosphere, the sealing ring (21) separating the interior space from the oil-free surroundings.

12. Gearshift tower unit (1) according to Claim 10 or 11, **characterized in that** further functional areas, in particular a shift guide plate (9) and/or a detent device (10), are integrated into the gearshift tower housing (5).

13. Gearshift tower unit (1) according to one of the preceding claims, **characterized in that** the gearshift tower housing (5) is configured as a single-piece plastic injection-moulded part.

## Revendications

1. Système de palier (11) pour un arbre (4) : avec un dispositif de palier (16) pour le positionnement de l'arbre (4), avec une section d'arrêt avec un logement (20) pour le dispositif de palier (16), le logement (20) étant délimite dans la direction axiale de l'arbre (4) au moins unilatéralement par une butée d'extrémité (21), de sorte qu'une sortie du dispositif de palier (16) hors du logement (20) est empêchée par la butée d'extrémité (21) et avec une bague d'étanchéité (21) réalisée et/ou disposée pour étanchéifier l'arbre (4), la butée d'extrémité comprenant la bague d'étanchéité (21) prenant la forme de la bague d'étanchéité (21) et la bague d'étanchéité (21) étant fixée par complémentarité de matières et/ou par complémentarité de formes dans le logement (20) et/ou contre celui-ci, **caractérisé en ce que** le dispositif de palier (16) est fixé sur le côté opposé à la bague d'étanchéité (21) par un élément de retenue (24) enfichable, devant la sortie.

2. Système de palier (11) selon la revendication 1, **caractérisé en ce que** la section d'arrêt est réalisée en matière plastique.

3. Système de palier selon la revendication 1 ou 2, **caractérisé en ce que** la bague d'étanchéité (21) est soudée et/ou collée dans le logement (20).

4. Système de palier (11) selon l'une quelconque des revendications précédentes, **caractérisé en ce que** le logement (20) forme dans la région du dispositif de palier (16) et de la bague d'étanchéité une fixation en forme de cylindre et/ou échelonnée en forme de cylindre.

5. Système de palier (11) selon l'une quelconque des revendications précédentes, **caractérisé en ce que** la bague d'étanchéité (21) prend la forme d'un joint affleurant.

6. Système de palier (11) selon l'une quelconque des revendications précédentes, **caractérisé en ce que** le dispositif de palier (16) se compose au moins en partie de métal.

7. Système de palier (11) selon la revendication 1, **caractérisé en ce que** l'élément de retenue (24) est enfoncé dans une fixation (23), dans une direction de poussée (25) en angle par rapport à l'extension axiale de l'arbre (4).

8. Système de palier (11) selon la revendication 1 ou 7, **caractérisé en ce que** l'élément de retenue (24) est sécurisé dans la fixation (23) avant une sortie du fait de l'arbre (4).

9. Système de palier (11) selon l'une quelconque des revendications 1 à 8, **caractérisé en ce que** l'élément de retenue (23) est fixé par complémentarité de matières et/ou par complémentarité de forces.

10. Module tourelle de sélection (1) avec un carter de tourelle de sélection (5) pour le positionnement d'un arbre de changement de vitesse (4), **caractérisé par** un système de palier (11) selon l'une quelconque des revendications précédentes.

11. Module tourelle de sélection (1) selon la revendication 10, **caractérisé en ce que** le carter de tourelle de sélection (5) prend la forme d'un cache délimitant un espace intérieur avec atmosphère de puisard d'huile, la bague d'étanchéité (21) séparant l'espace intérieur de l'environnement exempt d'huile.

12. Module tourelle de sélection (1) selon la revendication 10 ou 11, **caractérisé en ce que** des régions supplémentaires, notamment un guide coulissant de sélection (9) et/ou un dispositif de blocage (10), est intégré et/ou sont intégrés dans le carter de tourelle de sélection (5).

13. Module tourelle de sélection (1) selon lune quelconque des revendications précédentes, **caractérisé en ce que** le carter de tourelle de sélection (5) prend la forme d'une piète brute de fonderie réalisée d'un seul tenant par injection de plastique.
